# EUROPEAN PATENT SPECIFICATION

(11) **EP 3 782 828 B1**
(45) Date of publication and mention of the grant of the patent: **19.06.2024**
(21) Application number: 20190091.7
(22) Date of filing: 07.08.2020
(51) Int. Cl.: B29D 30/06, B60C 19/12, B60C 5/00

(54) **TIRE INCLUDING SEALANT LAYER AND SOUND ABSORBING MATERIAL LAYER**
REIFEN, EINSCHLIESSLICH DICHTUNGSSCHICHT UND SCHICHT AUS SCHALLDÄMPFENDEM MATERIAL
PNEU COMPRENANT UNE COUCHE D'ÉTANCHÉITÉ ET UNE COUCHE DE MATÉRIAU INSONORISANT

(30) Priority: 20.08.2019 KR 20190101824
(43) Date of publication of application: 24.02.2021
(73) Proprietor: HANKOOK TIRE & TECHNOLOGY CO., LTD, Gyeonggi-do 13494 (KR)
(72) Inventor: Lee, Ji Wan, Daejeon 34111 (KR); Jo, Seok Hee, Daejeon 34127 (KR); Seo, Byeong Ho, Daejeon 34111 (KR); Park, In Jeong, Daejeon 34127 (KR); Kim, Nam Seok, Daejeon 34111 (KR); Chung, Hae Kwang, Daejeon 35351 (KR); Kim, Jeong Heon, Daejeon 34090 (KR); Bae, Hyun Ah, Daejeon 34127 (KR)
(74) Representative: Zimmermann, Tankred Klaus

(56) References cited:
- WO-A1-2009/063723
- WO-A1-2017/151491
- US-A1- 2013 048 180
- US-A1- 2016 001 612

## Description

### BACKGROUND OF THE INVENTION

### Field of the invention

The present invention relates to a tire including a sealant layer and a sound absorbing material layer, and more particularly, relates to a tire in which a sound absorbing material layer including a non-woven fabric made of various organic polymer fiber materials is attached to a sealant layer applied to an inner surface of the tire so as to have a noise reduction performance while being capable of performing self-sealing when the tire is punctured.

### Related Art

A development of performance in a vehicle has stimulated a desire of an ordinary driver for high-speed driving, and for this purpose, various vehicle component and devices have been developed together. When a vehicle is driven at high speed, puncture of a tire greatly threatens safety of a driver and a passenger, steering power of the vehicle loses, and thus, a serious accident which damages other persons or objects around the vehicle may occur. In order to prevent this, a tire using a technology of inserting a sealant capable of sealing the puncture inside the tire or a technology (run-flat) of adding a hard-auxiliary material so that the punctured tire does not sit down has been developed and commercialized.

Meanwhile, in recent years, with development in a technology of a vehicle and development in a vehicle powered by electricity or a hybrid vehicle, a noise of a tire has become more prominent than a noise of the vehicle itself. Accordingly, various attempts have been made to reduce the noise of the tire. In order to reduce a noise caused by contact with a road surface, attempts have been made to adjust a pitch of a tread pattern or attach a foam of an organic polymer material to an inside of a tire, or attempts have been made to reduce the noise of the vehicle using a polyethylene naphthalate (PEN) cord as a material of the capply.

Here, the method of adjusting the shape and pitch of the tread pattern is a method to reduce the noise of the road-tire which is already widely known, and the method of applying the PEN as the material of the capply is not a great effect compared to an input cost, which is currently an abandoned technology. Recently, in order to prevent a loss of an air pressure caused by a damage of a tire, a sealant and a sound-absorbing foam attachment are together applied to the inside of the tire. Here, in most cases, a sealant for preventing air leakage uses low-viscosity butyl rubber (butyl rubber compound having low Mooney viscosity), and a foam body as a sound absorbing material is attached to the sealant.

US 2013-0048180 A1 discloses a pneumatic tire and a method for manufacturing the same. The pneumatic tire includes a porous sound-absorbing material adhered via a sealant layer to the inside surface of an inner liner, wherein the sealant layer comprises 100 to 400 parts by weight of polyisobutylene, 10 to 100 parts by weight of an inorganic additive and 1 to 15 parts by weight of a vulcanizing agent, with respect to 100 parts by weight of a butyl rubber.

US 2016-0001612 A1 relates to a low noise tire, and more specifically, to a low noise tire that includes: a sealant layer adhered to an inside surface of an inner liner of the tire; and a sound-absorbing material layer adhered to the sealant layer, in which the sound-absorbing material layer includes 50 to 90 wt % of a polypropylene melt-blown fiber and 10 to 50 wt % of a polymer fiber.

WO2009/063723 A1 relates to a tire in which cavity resonance is effectively suppressed and which emits reduced road noise. The tire has a sound absorption layer on the inner surface of an inner liner. The sound absorption layer is made from non-woven fabric formed by joining fibers to each other.

However, in a case where the sealant and the foam body (a porous foam absorbing material such as foamed urethane/sponge) are used, when air leaks due to a damage of a tread, only the sealant should fill the damaged portion. However, according to a rate of air leakage due to an air inner pressure, foam body penetrates into the damaged portion together, it is not possible to correctly prevent the air leakage, and there is a problem that the sealant cannot properly exhibit an effect of maintaining the air pressure.

### SUMMARY OF THE INVENTION

The invention as claimed provides a tire in which a sound absorbing material layer including a non-woven fabric made is attached to a sealant layer applied to an inner surface of the tire so as to have a noise reduction performance while being capable of performing self-sealing when the tire is punctured, and when the tire is punctured and damaged, only a sealant is applied to a damaged portion, a constituent component of the sound absorbing material layer is not applied to the damaged portion, and thus, air leakage can be effectively prevented.

In an aspect, there is provided a tire including: a sound absorbing material layer which is attached to an inner surface of a tire; and a sealant layer which is disposed between the inner surface of the tire and the sound absorbing material layer and includes a sealant which attaches the sound absorbing material layer to the inner surface of the tire, in which the sound absorbing material layer includes a non-woven fabric that is a polypropylene air-through non-woven fabric and the sealant comprises a rubber component including 30 parts by weight of low viscosity polyisobutylene having a level of 25 in the viscosity based on Mooney viscosity ML1+8 and 125°C, 70 parts by weight of fluid polyisobutylene having a viscosity of 30,000 cps based on 100°C, 30 parts by weight of carbon black, 5 parts by weight of processing oil, and 2 parts by weight of a vulcanizing agent, based on 100 parts by weight of the rubber component.

A thickness of a filament constituting the non-woven fabric may be equal to or more than 1 denier and less than 10 denier.

The non-woven fabric, based on a cross-sectional width of the tire, may be formed to have a width of 30 to 80%, and
a thickness of the non-woven fabric may be equal to or more than 3 mm and less than 60 mm.

A surface density of the non-woven fabric may be 200 g/m² to 1,000 g/m².

An air pressure inside the tire when 10 minutes elapse after the tire is punctured and leakage of air inside the tire starts may maintain 85% based on an initial air pressure.

The sound absorbing material layer maintains a thickness of 85% or more based on an initial thickness after a vehicle to which the tire is applies travels 10,000 km.

### BRIEF DESCRIPTION OF THE DRAWINGS

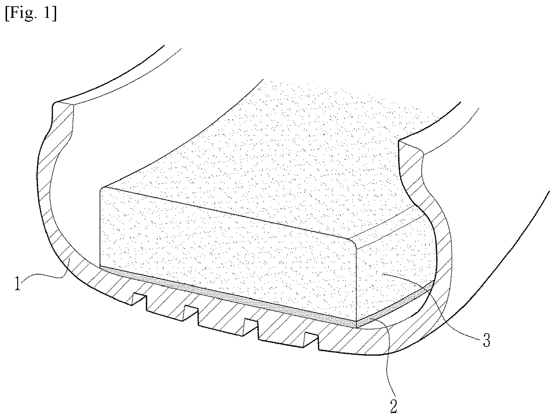

FIG. 1 is a cut-away perspective view illustrating a tire according to an embodiment of the present invention.

### DESCRIPTION OF EXEMPLARY EMBODIMENTS

Hereinafter, an embodiment of the present invention will be described in detail with reference to the accompanying drawings so that a person skilled in the art to which the present invention belongs can easily implement the present invention. However, the present invention can be implemented in many different forms and is not limited to the embodiment and drawings described herein but by the scope defined in the appended claims.

According to an embodiment of the present invention, a tire includes a sound absorbing material layer which is attached to an inner surface of a tire, and a sealant layer which is disposed between the inner surface of the tire and the sound absorbing material layer and includes a sealant which attaches the sound absorbing material layer to the inner surface of the tire, in which the sound absorbing material layer includes a non-woven fabric.

First, according to the present invention, it is possible to reduce a tire noise due to frequencies of various bands generated by vibrations in a case where a tire and a road surface come into contact with each other when a vehicle travels, by the sound absorbing material layer including the non-woven fabric.

Meanwhile, recently, in the existing run flat tire, in order to remove disadvantages of riding comfort and a rotation resistance by reinforcing an inside of a sidewall portion with a rubber composition having high hardness, a technology of coating low-viscosity butyl rubber composition with a sealant inside a tread portion, blocking a damaged portion caused by an external damage with a sealant to prevent leakage of air and to obtain a so-called run flat effect is widely expanded.

In addition to the technology, a technology of attaching a foam body-shaped porous polymer foam sound absorbing materials to a tread is widely used by a tire manufacturer. Here, the sealant itself has excellent adhesiveness, and the sealant does not require a separate adhesive application process. Accordingly, the sealant absorbs all strain of the tire which is transmitted to the sound absorbing material and prevents a bonding surface and an adhesion surface of the sound absorbing material from being separated from each other during traveling. However, mechanical properties of the foam body are not excellent, and the attachment surface is in close contact with the sealant. Accordingly, in a case where the tire is damaged, when the sealant fills up the damaged portion due to an air flow caused by air leakage, the foam body sound absorbing material is torn and fills up the damaged portion together with the sealant, and finally, air leakage cannot be properly prevented due to the foam body entering the damaged portion, and rapid leakage of the air occurs. That is, when the sealant for preventing air leakage and the foam body are applied together, there is a problem in that performance of preventing the air leakage by the sealant cannot be fully exhibited.

However, according to the invention as claimed, when the tire is punctured and damaged, only the sealant is introduced into the damaged portion, a constituent component of the sound absorbing material layer including the non-woven fabric is not introduced into the damaged portion, and thus, it is possible to effectively prevent the air leakage.

Moreover, the tire according to the invention as claimed is a self-sealing sealant tire in which an inner surface (cavity of the tire) of an inner liner is coated with a sealant including a special polymer material. Accordingly, when a tread of the tire is punctured by a nail or a sharp foreign material, the sealant immediately seals the punctured portion so as to prevent air leakage, and a driver can travel a vehicle without getting off at a shoulder of a road and replacing the tire.

FIG. 1 is a cut-away perspective view illustrating an air-pressure tire according to an embodiment of the present invention. Referring to FIG. 1, a tire 1 according to the invention as claimed includes a sealant layer 2 applied to an inner surface and a sound absorbing material layer 3 including a non-woven fabric attached to the sealant layer 2.

The sealant layer 2 is applied to the inner surface of the tire 1, and when the tire 1 includes an inner liner therein, the sealant layer 2 may be located on the inner liner.

The sealant layer 2 may be applied to a portion or the entire surface of the inner surface of the tire 1, and preferably, only to the inner surface of the tire 1 corresponding to a ground surface. This is because a portion through which the tire 1 is mainly penetrated by a foreign matter is the portion of the tire 1 corresponding to the ground surface. Accordingly, a width of the sealant layer 2 may be 100% to 120% in length relative to a width of a tread portion of the tire 1.

In addition, a thickness of the sealant layer 2 may be 1 mm to 10 mm. When the thickness of the sealant layer 2 is within the above range, it is possible to reliably perform the self-sealing against the puncture generated by a nail or protrusion without affecting flow characteristics of the sealant.

The sealant layer 2 may be manufacturing by crosslinking a sealant composition containing a rubber component or without performing crosslinking on a sealant composition containing a crosslinked rubber component. The sealant composition is not limited as long as the sealant composition has adhesive properties, and a general rubber composition used for sealing the puncture of the tire 1 can be used.

For example, the sealant composition may use a sealant composition containing butyl rubber as a main component, and other sealant compositions including a natural rubber compound, a silicone compound, a urethane compound, a styrene compound, or an ethylene compound may also be used.

As the butyl-based rubber, halogenated butyl rubber (X-IIR) such as butyl rubber (IIR), brominated butyl rubber (Br-IIR), or chlorinated butyl rubber (Cl-IIR) can be used.

In addition, as a rubber component, the sealant composition may further include di-based rubber such as natural rubber (NR), isoprene rubber (IR), butadiene rubber (BR), styrene-butadiene rubber (SBR), styrene-isoprene-butadiene rubber (SIBR), ethylene propylene diene rubber (EPDM), chloroprene rubber (CR), or acrylonitrile butadiene rubber (NBR). However, from the viewpoint of fluidity or the like, preferably, a content of the butyl-based rubber is 90% by weight or more with respect to 100% by weight of the rubber component.

The sealant composition may further include polyisobutylene, and the polyisobutylene may have a weight average molecular weight of 1,000 g/mol to 10,000 g/mol. In addition, the polyisobutylene may be included in 100 parts by weight to 500 parts by weight based on 100 parts by weight of the rubber component. If the content of the polyisobutylene is less than 100 parts by weight, flowability of the material may be reduced, and if the content exceeds 500 parts by weight, morphological stability of the material may be reduced.

Meanwhile, the sealant composition may further include a liquid polymer. The liquid polymer may be liquid polybutylene, liquid polyisobutylene, liquid polyisoprene, liquid polybutadiene, liquid poly α-olefin, liquid isobutylene, liquid ethylene α-olefin copolymer, liquid ethylene propylene copolymer, liquid Ethylene butylene copolymer, or the like. The liquid polymer may be included in 50 parts by weight to 1,000 parts by weight with respect to 100 parts by weight of the rubber component, and more specifically, in 150 parts by weight to 500 parts by weight. When the content of the liquid polymer is less than 50 parts by weight, the flowability of the material may be reduced, and when the content exceeds 1,000 parts by weight, the morphological stability of the material may be reduced.

The sealant composition may further include an inorganic additive. The inorganic additive is for adjusting reinforcing properties of the sealant composition, and is selected from a group consisting of carbon black, silica, calcium carbonate, calcium silicate, magnesium oxide, aluminum oxide, barium sulfate, talc, mica, and a mixture thereof. In this case, the inorganic additive may be included in 10 parts by weight to 100 parts by weight based on 100 parts by weight of the rubber component, and preferably, 30 parts by weight to 60 parts by weight.

In addition, the sealant composition may further include an additive which is selected from a group consisting of a vulcanizing agent, a vulcanization accelerator, a vulcanizing acceleration assistant, an adhesive, and a mixture thereof.

The vulcanizing agent is to support the crosslinking of the sealant composition, and may be included in 1 part by weight to 20 parts by weight based on 100 parts by weight of the rubber component, and preferably, 5 parts by weight to 10 parts by weight.

As the vulcanizing agent, a sulfur-based vulcanizing agent, an organic peroxide, bismaleimide, benzoquinone derivative, a phenolic vulcanizing agent, or a metal oxide such as magnesium oxide may be used. As the sulfur-based vulcanizing agent, an inorganic vulcanizing agent such as powdered sulfur (S), insoluble sulfur (S), precipitated sulfur (S), and colloidal sulfur may be used.

The vulcanization accelerator for promoting the vulcanization may use any one selected from a group consisted of a sulfenamide-based vulcanization accelerator, a thiazole-based vulcanization accelerator, a thiuram-based vulcanization accelerator, a thiourea-based vulcanization accelerator, a guanidine-based vulcanization accelerator, a dithiocarbamic-based vulcanization accelerator, an aldehyde-amine-based vulcanization accelerator, an aldehyde-ammonia-based vulcanization accelerator, an imidazoline-based vulcanization accelerator, an xanthate-based vulcanization accelerator, and a mixture thereof. In this case, the vulcanization accelerator may be included in 0 parts by weight to 10 parts by weight based on 100 parts by weight of the rubber component, and preferably, 3 parts by weight to 5 parts by weight.

The vulcanizing acceleration assistant is a compounding agent used in combination with the vulcanization accelerator to complete the acceleration effect, and may be used together with zinc oxide and stearic acid. When the vulcanizing acceleration assistant is used together with the zinc oxide and the stearic acid, the vulcanizing acceleration assistance may be used in 1 part by weight to 5 parts by weight and 0.5 parts by weight to 3 parts by weight, respectively, for 100 parts by weight of the rubber component, to serve as an appropriate vulcanizing acceleration assistant.

Moreover, as the adhesive for improving the adhesion of the sealant composition, a natural resin such as a phenolic resin, a rosin resin, or a terpene resin, and a synthetic resin such as a petroleum resin, coal tar, or an alkyl phenolic resin may be used. In this case, the adhesive may be included in 0 parts by weight to 10 parts by weight based on 100 parts by weight of the rubber component, and preferably, 3 parts by weight to 5 parts by weight.

Here, as the sealant, most preferably, a low Mooney poly isobutylene rubber may be used, that is, an isobutylene rubber having a viscosity of approximately 15 to 40 based on a Mooney viscosity of ML1 + 8 and 125°C may be used, or as a liquid polyisobutylene rubber, a polyisobutylene rubber having a viscosity of 100 to 50,000 cps based on 100°C may be used. In this case, as a composition range of the sealant, the low viscosity poly isobutylene rubber is 1 to 50 parts by weight, the liquid polyisobutylene rubber is 50 to 99 parts by weight, ASTM grade N660 or N330 carbon black is 5 to 50 parts by weight, oil for improving processability is 1 to 10 parts by weight, and a vulcanizing agent (sulfur) is 0.01 to 3 parts by weight.

Meanwhile, the sound absorbing material layer 3 includes the non-woven fabric. The sound absorbing material layer may be a non-woven fabric having a single-layer structure or a non-woven fabric laminated with a multi-layer structure. However, in a case where the tire is punctured and the air leaks, when the sealant fills the damaged portion for performing the self-sealing, fibers constituting the non-woven fabric forming the sound absorbing material layer 3 are not put into the damaged portion.

As the non-woven fabric, a non-woven fabric is preferable, in which a web is formed by carding natural fibers or staple fibers, and thereafter, a surface layer of the web is configured to have a high density through an air-through method or chemical binding. In the case of the non-woven fabric manufactured by the carding method, it is easy to set fineness of the fiber, it is possible to adjust a mixing amount of low-melting fibers for binding which can control various thermal fusion levels through the air-through method (or ultrasonic wave or microwave), and in the case of chemical binding, an amount of binder used can be adjusted to control the properties of the non-woven fabric. In this case, the used staple fiber and the natural fiber may be constituted by stapling any one selected from a group consisted of a cellulose series such as cotton, hemp, rayon, and lyocell; a cellulose acetate series; a polyester series such as polyethylene terephthalate (PET), polyethylene naphthalate (PEN), polytrimethylene terephthalate (PTT), polybutylene terephthalate (PBT), other semi aromatic polyesters, and aliphatic polyesters; a polyamide series such as aliphatic polyamide (N66, N6, N46, or the like), aromatic polyamide (polypara-phenylene terephthalamide (PPTA), poly (3,4' diphenyl ether/para-phenylene terephthalate) (DPE/PPTA), and poly m-phenylene isophtalamide (PMIA); an acrylic series (PAN, Modacryl); a polyvinyl chloride series; a polyvinyl alcohol series; and a polyolefin series such as polypropylene and polyethylene, or two or more mixed fibers thereof.

In the method of constituting the web through the carding process, the natural or artificial fibers are crimped through a process such as false twist, a stub-box method, and an air-jet texturing method, and thereafter, are cut to a unit length of 10 mm to 200 mm to prepare a raw cotton (cotton wool). In this case, in order to use the air-through method, the raw material is prepared by mixing fibers serving as a binder such as low melting point PET (LM-PET) having a relatively low melting temperature at a level of 0.5 to 30% by weight. The prepared raw cotton constitutes the webs through the carding process, and the webs are laminated to have a desired thickness. The laminated web melts the above-described mixed low-melt fiber through the air-through method, and fixes fibers constituting the non-woven fabric. In this case, according to selection of the low-melting binder material, hot air is applied at a temperature between 100 and 250°C, and thus, the laminated webs can be obtained as the non-woven fabric in a fixed form between fibers. As the low melting temperature method, there may be a chemical binding method of chemically binding each fiber by applying a liquid adhesive to the web. Most preferably, it is manufactured in the order of fiber - texturing processing - cutting - carding - lamination - bonding (binding). In addition, fibers made of short fibers may be laminated in a method such as air Laid and wet laid.

A reason for forming the web using the fibers secured in advance through the separate processes as described above is that, compared to a spun-bond/melt-blown spinning method-based non-woven fabric, it is easy to secure bulkiness (volume). Moreover, a reason for using the air-through method or chemical binding is that it is easy to maintain the bulkiness secured in the web configuration. In the case of spun-lace and needle punching, there is a problem in that it is difficult to secure bulkiness by pressing because the non-woven fabric is formed by constituting a physical interlock, and most importantly, the fibers are physically bound to each other, and thus, there is a problem that the fibers are be easily detached from the non-woven fabric surface. In particular, when a filament is easily detached from the surface of the non-woven fabric, the above-described self-sealing properties of the sealant are inhibited, and thus, it is not possible to effectively the leakage of the air due to the damage of the tire. When the tire is damaged, the damaged portion should be filled with the sealant together with an initial air leakage, because the filament may be sucked. However, there is a possibility that the filament is sucked. Accordingly, the filament constituting the non-woven fabric and the sealant inhibit the operation of filling the damaged portion quickly and accurately together with the air leakage, and thus, the non-woven fabric of the general melt-blown method is difficult to use.

In addition, due to heat and a centrifugal force generated during traveling, the sound absorbing material layer made of the non-woven fabric is pressed and is easy to lose the bulkiness. Accordingly, a method of manufacturing the non-woven fabric and resilience of fibers constituting the non-woven fabric may be important factors.

In order for the sound absorbing material layer 3 including the non-woven fabric to sustain the bulkiness and maintain sound absorption performance, preferably, a thickness of the filament which is a short fiber constituting the non-woven fabric is equal or more than 1 denier and less than 10 denier to have minimal mechanical properties. If only the sound absorption performance is considered, the finer the fineness of the non-woven fabric constituting the web, the more the surface area increases. Accordingly, the sound absorption performance compared to the weight may be advantageous. However, a low-frequency characteristic corresponding to a resonance sound has a close relationship to the thickness of the sound insulation layer/sound absorbing material layer, and thus, it is necessary to have an appropriate level of thickness of the fiber having a flexural modulus to maintain a uniform thickness.

When the thickness of the filament is less than 1 denier, an initial sound absorbing effect is excellent compared to the weight. However, the sound absorbing material layer easily loses the bulkiness, and according to the period of use, the sound absorbing property may be reduced along with a decrease in the thickness of the sound absorbing material layer. In addition, an absolute value of the mechanical properties for one strand of the filament is inevitably reduced, and thus, the filament is torn together with the sealant when air leaks and the self-sealing of the sealant is inhibited. When the thickness of the filament is equal to or more than 10 denier, the bulkiness can be maintained for a long period of time. However, the specific surface area compared to the weight is low. Accordingly, there are disadvantages in constructing the sound absorbing material layer due to air friction characteristics caused by air viscosity, a pore size may increase, and the weight of the non-woven fabric may increase.

By disposing the non-woven fabric which is strongly bound between the filaments having the thickness and secures the bulkiness on the sealant layer, when the tire is damaged, the self-sealing of the sealant is effectively achieved to prevent the air leakage, the sound absorption performance is maintained, and it is possible to prevent the sealant appliance surface from being contaminated when the tire is distributed and used.

Meanwhile, the surface density of the non-woven fabric may be 200 g/m² to 1,000 g/m². When the surface density is less than 200 g/m², the sound absorption performance is not sufficient, and when the surface density exceeds 1,000 g/m², it is not preferable because the weight of the tire increases and the rolling resistance may increase.

In addition, the thickness of the sound absorbing material layer 3 including the non-woven fabric may be equal to or more than 3 mm and less than 60 mm. When the thickness is less than 3 mm, the sound absorbing material cannot sufficiently absorb a noise of the tire, and when the thickness is equal to or more than 60 mm, the sound absorbing material is advantageous for the noise absorption, but there is a problem that the tire weight increases significantly and the sound absorbing material is not easily attached to the inside of the tire.

In addition, not only one type of the non-woven fabric may be used, but combination of the non-woven fabrics may be used. For example, a spun-bond non-woven fabric having a thickness of about 3 mm and an air-through non-woven fabric having a thickness of about 30 mm may be laminated and used. In addition, as the surface of the non-woven fabric which is in contact with the sealant layer 2, a PET air-through 20 mm non-woven fabric may be applied, and a PP air-through 20 mm non-woven fabric may be laminated thereon. Here, when the fiber thickness and bulkiness of the spun-bond non-woven fabric and the air-through non-woven fabric are different from each other, or the fineness and density (bulkiness) of the PET non-woven fabric and the PP non-woven fabric are different from each other, the frequency at which the sound can be absorbed is diversified, and thus, effective sound absorption performance can be realized. When the non-woven fabric manufactured in this way is combined with a polymer foam body, the sound absorption frequency band may be further widened. In this case, the surface attached to the sealant layer may be the non-woven fabric. As described above, a method of combining a plurality of non-woven fabrics may use a method such as ultrasonic welding, air-through method, chemical binding through adhesive, or stitching, or may use a cyano acryl based adhesive, a synthetic rubber-based adhesive, or an acrylic resin, and in the present invention, the type of the adhesive is not limited.

The sound absorbing material layer 3 including the non-woven fabric of the present invention may be attached to have a width of 30 to 80% based on a cross-sectional width of the tire, that is, the Nominal Section Width (NSW), and the sound absorbing The material layer 3 may be a sheet shape extending in the circumferential direction of the tire 1. That is, the sound absorbing material layer 3 extends along the circumferential direction of the tire 1 in a sheet shape, and both ends thereof meet each other to be a ring shape like the tire (1). In addition, a start point and an end point formed when the sound absorbing material layer 3 is attached may be attached spaced apart at intervals of 5 mm to 80 mm.

Firstly, a high-viscosity, high-tack sealant is applied to the inner surface of the tire and then the non-woven fabric is attached, and thus, the non-woven fabric can be attached without a need for a separate adhesive/bonding agent. Moreover, the non-woven fabric may be attached using an additional adhesive/bonding agent.

As described above, the sound absorbing material layer including the non-woven fabric may have a thickness equal to or more than 3 mm and less than 60 mm, and also after 6 months or 10,000 km in the traveling, preferably, a thickness of 85% or more in the sound absorbing material layer based on the initial sound absorbing material layer thickness is maintained.

Hereinafter, embodiments of the invention as claimed will be described in detail so that a person having an ordinary knowledge in a technical field to which the present invention belongs can easily implement the present invention. However, the invention as claimed can be implemented in many different forms within the scope defined in the appended claims and is not limited to the embodiments described herein.

### [Manufacturing Example: Manufacturing of Tire]

A sealant composition was prepared by mixing 30 parts by weight of low viscosity polyisobutylene having a level of 25 in the viscosity based on Mooney viscosity ML1+8 and 125°C, 70 parts by weight of fluid polyisobutylene having a viscosity of 30,000 cps based on 100°C, 30 parts by weight of ASTM grade N660 carbon black, 5 parts by weight of commonly used processing oil, and 2 parts by weight of a vulcanizing agent (sulfur) and was used as a composition for forming the sealant layer, and a 225/45R17 standard tire was used as the tire.

In Table 1 below, Comparative Example 1 is a tire which is currently used, Comparative Example 2 is a tire to which only the sealant layer is applied, and Comparative Example 3 is a tire to which the sealant layer and the polyurethane foam body (PU Foam) are applied as the sound absorbing material layer. Moreover, Examples 1 to 3 are tires in which the sealant layer is applied, and then, the sound absorbing material layer made of the non-woven fabric corresponding to each is attached to the inside of the tread inside the tire.

**[Table 1]**

| | Comparative Example 1 | Comparative Example 2 | Comparative Example 3 | Example 1 | Example 2 | Example 3 |
|---|---|---|---|---|---|---|
| Standard | 225/45R17 | 225/45R17 | 225/45R17 | 225/45R17 | 225/45R17 | 225/45R17 |
| Whether or not sealant layer is applied | Not applied | Applied (thickness 5mm) | Applied (thickness 5 mm) | Applied (thickness 5 mm) | Applied (thickness 5 mm) | Applied (thickness 5 mm) |
| Sound absorbing material | Not applied | Not applied | Applied | Applied | Applied | Applied |
| Material of sound absorbing material | - | - | PU fam (width 150 mm, thickness 40 mm) | PP air-through non-woven fabric (width 150 mm, thickness 40 mm, Filament denier: 5 denier) 500 gsm | PP air-through non-woven fabric (width 150 mm, thickness 40 mm, Filament denier: 1 denier) 500 gam | PP air-through non-woven fabric (width 150 mm, thickness 40 mm, Filament denier: 5 denier) 650 gam |

### [Experimental Example: Tire Performance Measurement]

An air leakage rate, a sound absorbing material thickness retention rate, and a tire noise after a nail penetrates the tire under rough road traveling conditions of a tire-equipped vehicle manufactured in the above Examples and Comparative Examples were measured, and the results are illustrated in Table 2 below.

**Table 2]**

| | Comparative Example 1 | Comparative Example 2 | Comparative Example 3 | Example 1 | Example 2 | Example 3 |
|---|---|---|---|---|---|---|
| Air leakage rate (residue air pressure when 20 minutes elapse after nail penetrates | 0 | 98 | 80 | 95 | 94 | 95 |
| Sound absorbing material thickness retention rate after 6 months of actual use | - | - | 100 | 95 | 88 | 96 |
| Peak dB (60 km/h, rough road) (20 to 500 Hz) | 68 | 68 | 65 | 64 | 63 | 63 |

When the vehicle travels at 60 kph under the rough road traveling conditions, Comparative Example 1 shows a peak dB of 68 dB, while Example 1 shows 64 dB and Examples 2 and 3 show 63 dB, respectively. As the thickness of the non-woven fabric used as the sound absorbing material layer increases, it can be confirmed that the sound absorbing effect tends to increase. When the surface densities and the thicknesses thereof are the same as each other, as quantitative fineness of the fibers constituting the non-woven fabric deceases, the sound absorption effect increases. However, after a period of use, the rate of thickness reduction is relatively large. All of Examples 1 to 3 show an advantage in comparison with Comparative Example 3 in terms of the air leakage rate. This is because it is determined that the sound absorbing material made of the non-woven fabric is not significantly involved in the self-sealing effect of the sealant.

Hereinbefore, the preferred embodiment of the present invention is described in detail above. However, the scope of the present invention is not limited to the embodiment, and various modifications and improvements of those skilled in the art can be made within the scope of the appended claims.

According to the tire of the present invention, the sound absorbing material layer including the non-woven fabric made is attached to the sealant layer applied to the inner surface of the tire so as to have the noise reduction performance while being capable of performing the self-sealing when the tire is punctured, and when the tire is punctured and damaged, only the sealant is applied to the damaged portion, a constituent component of the sound absorbing material layer is not applied to the damaged portion, and thus, air leakage can be effectively prevented.

## Claims

1. A tire (1) comprising:
a sound absorbing material layer (3) which is attached to an inner surface of a tire; and
a sealant layer (2) which is disposed between the inner surface of the tire and the sound absorbing material layer (3) and includes a sealant which attaches the sound absorbing material layer (3) to the inner surface of the tire,
wherein the sound absorbing material layer (3) includes a non-woven fabric,
**characterized in that** the non-woven fabric is a polypropylene air-through non-woven fabric,
wherein the sealant comprises a rubber component including 30 parts by weight of low viscosity polyisobutylene having a level of 25 in the viscosity based on Mooney viscosity ML1+8 and 125°C, 70 parts by weight of fluid polyisobutylene having a viscosity of 30,000 cps based on 100°C, 30 parts by weight of carbon black, 5 parts by weight of processing oil, and 2 parts by weight of a vulcanizing agent, based on 100 parts by weight of the rubber component.

2. The tire (1) of claim 1, wherein a thickness of a filament constituting the non-woven fabric is equal to or more than 1 denier and less than 10 denier.

3. The tire (1) of claim 1, wherein the non-woven fabric, based on a cross-sectional width of the tire, is formed to have a width of 30 to 80%, and
a thickness of the non-woven fabric is equal to or more than 3 mm and less than 60 mm.

4. The tire (1) of claim 1, wherein a surface density of the non-woven fabric is 200 g/m² to 1,000 g/m².

## Patentansprüche

1. Ein Reifen (1), der folgende Merkmale aufweist:
eine schallabsorbierende Materialschicht (3), die an einer inneren Oberfläche eines Reifens angebracht ist;
eine Dichtstoffschicht (2), die zwischen der inneren Oberfläche des Reifens und der schallabsorbierenden Materialschicht (3) angeordnet ist und einen Dichtstoff umfasst, der die schallabsorbierende Materialschicht (3) an der inneren Oberfläche des Reifens anbringt,
wobei die schallabsorbierende Materialschicht (3) einen Vliesstoff umfasst,
**dadurch gekennzeichnet, dass** der Vliesstoff ein luftdurchlässiger Polypropylenvliesstoff ist,
wobei der Dichtstoff eine Gummikomponente aufweist, die 30 Gewichtsteile niedrigviskoses Polyisobutylen mit einem Viskositätswert von 25 auf Basis der Mooney-Viskosität ML1+8 und 125 °C, 70 Gewichtsteile Fluid-Polyisobutylen mit einer Viskosität von 30.000 cPs, basierend auf 100 °C, 30 Gewichtsteile Kohleschwarz, 5 Gewichtsteile Bearbeitungsöl und 2 Gewichtsteile Vulkanisierungsmittel, basierend auf 100 Gewichtsteilen der Gummikomponente, umfasst.

2. Der Reifen (1) gemäß Anspruch 1, bei dem eine Dicke eines Filaments, das den Vliesstoff bildet, gleich oder mehr als 1 Denier, und weniger als 10 Denier beträgt.

3. Der Reifen (1) gemäß Anspruch 1, bei dem der Vliesstoff basierend auf einer Querschnittsbreite des Reifens so gebildet ist, dass derselbe eine Breite von 30 bis 80 % aufweist, und
eine Dicke des Vliesstoffs gleich oder mehr als 3 mm und weniger als 60 mm beträgt.

4. Der Reifen (1) gemäß Anspruch 1, bei dem eine Oberflächendichte des Vliesstoffs 200 g/m² bis 1.000 g/m² beträgt. beträgt.

## Revendications

1. Pneu (1) comprenant:
une couche de matériau insonorisant (3) qui est fixée à une surface intérieure d'un pneu; et
une couche de produit d'étanchéité (2) qui est disposée entre la surface intérieure du pneu et la couche de matériau insonorisant (3) et comporte un produit d'étanchéité qui fixe la couche de matériau insonorisant (3) à la surface intérieure du pneu,
dans lequel la couche de matériau insonorisant (3) comporte un tissu non tissé,
**caractérisé par le fait que** le tissu non-tissé est un tissu non-tissé en polypropylène laissant passer l'air,
dans lequel le produit d'étanchéité comprend un composant de caoutchouc comportant 30 parties en poids de polyisobutylène à faible viscosité présentant un niveau de viscosité de 25 sur base de la viscosité de Mooney ML1+8 et de 125°C, 70 parties en poids de polyisobutylène fluide présentant une viscosité de 30.000 cps sur base de 100°C, 30 parties en poids de noir de carbone, 5 parties en poids d'huile de traitement et 2 parties en poids d'un agent de vulcanisation, sur base de 100 parties en poids du composant de caoutchouc.

2. Pneu (1) selon la revendication 1, dans lequel l'épaisseur d'un filament constituant le tissu non-tissé est égale ou supérieure à 1 denier et inférieure à 10 deniers.

3. Pneu (1) selon la revendication 1, dans lequel le tissu non tissé, sur base d'une largeur de section transversale du pneu, est formé de manière à présenter une largeur de 30 à 80%, et
une épaisseur du tissu non-tissé est égale ou supérieure à 3 mm et inférieure à 60 mm.

4. Pneu (1) selon la revendication 1, dans lequel une densité de surface du tissu non-tissé est de 200 g/m² à 1.000 g/m².
